# EUROPEAN PATENT APPLICATION

(11) **EP 3 597 608 A1**
(43) Date of publication of application: **22.01.2020**
(21) Application number: 17900702.6
(22) Date of filing: 15.09.2017
(51) Int. Cl.: C02F 3/20, B01F 1/00, C02F 1/44, C02F 3/08, C02F 3/10

(54) **AEROBE TREATMENT METHOD**

(30) Priority: 16.03.2017 JP 2017051092
(71) Applicant: Kurita Water Industries Ltd., Tokyo 164-0001 (JP)
(72) Inventor: KOBAYASHI, Hideki, Tokyo 164-0001 (JP); FUKASE, Tetsurou, Tokyo 164-0001 (JP)
(74) Representative: Hoffmann Eitle
(86) International application number: PCT/JP2017/033547
(87) International publication number: WO 2018/168023

(57) **Abstract**

Provided is an aerobic biological treatment method for treating water to be treated with aerobic organisms by dissolving oxygen in the water to be treated within a reaction tank 3 using an oxygen dissolution membrane module 32 disposed in the reaction tank 3, wherein a bioadhesive carrier within the reaction tank 3 is suspended or fluidized to prevent adhesion of organisms to the oxygen dissolution membrane module 32.

## Description

### Technical Field

The present invention relates to a method of treating organic water to be treated with aerobic organisms, and particularly relates to an aerobic biological treatment method of the MABR (membrane aeration bioreactor) system in which oxygen is dissolved in water to be treated within a reaction tank using an oxygen dissolution membrane.

### Background Art

In the aerobic biological treatment method according to the MABR system, oxygen is dissolved in water to be treated using an oxygen dissolution membrane to perform aerobic biological treatment. As the oxygen dissolution membrane, a hollow fiber membrane is often used as in Patent Literature 1.

PTL 1: JP 4907992 B

In conventional MABRs, organic matter in wastewater has been treated by organisms adhering to hydrophobic non-porous membranes. Although the hydrophobic non-porous membranes have the merits of having high oxygen dissolution efficiency and being capable of dissolving oxygen with low pressure, the oxygen supply rate is considerably reduced by adhesion of a biofilm. It is possible to prevent the reduction in oxygen supply rate to some extent by controlling the biofilm so as not to be excessively thick by strong aeration, strong stirring, or the like. Nevertheless, the oxygen supply rate is reduced to 1/10 or less of the maximum rate, in the case of silicone hollow fiber membranes or the like.

### Summary of Invention

It is an object of the present invention to provide an aerobic biological treatment method that prevents adhesion of organisms to oxygen dissolution membranes, so that the oxygen supply rate of the oxygen dissolution membranes can be maintained high.

The gist of the present invention is as follows.
[1] An aerobic biological treatment method for treating water to be treated with aerobic organisms by dissolving oxygen in the water to be treated in a reaction tank using an oxygen dissolution membrane disposed in the reaction tank, wherein a bioadhesive carrier within the reaction tank is suspended or fluidized to prevent adhesion of the organisms to the oxygen dissolution membrane.
[2] The aerobic biological treatment method according to [1], wherein the bioadhesive carrier has a particle size of 0.1 to 20 mm and is added in an amount of 1 to 50% of the volume of the reaction tank.
[3] An aerobic biological treatment method for treating water to be treated with aerobic organisms by dissolving oxygen in the water to be treated in a reaction tank using an oxygen dissolution membrane disposed in the reaction tank, wherein the concentration of MLSS in the reaction tank is increased to 10,000 mg/L or more to prevent adhesion of the organisms to the oxygen dissolution membrane.
[4] The aerobic biological treatment method according to any one of [1] to [3], wherein the oxygen dissolution membrane has an average oxygen supply rate of 15 g-O₂/m²/day or more.

### Advantageous Effects of Invention

According to one aspect of the aerobic biological treatment method of the present invention, the adhesion of organisms to the oxygen dissolution membrane is prevented (or suppressed) by suspending or fluidizing the bioadhesive carrier. Thereby, a significantly high oxygen dissolution rate is stably obtained. The pressure necessary for dissolving oxygen is the same as in conventional methods.

Since the power for fluidizing the bioadhesive carrier such as activated carbon, sponge or the like is sufficiently obtained by supply of raw water using a pump or slight aeration, the cost is negligibly low.

According to one aspect of the present invention, the adhesion of organisms to the oxygen dissolution membrane can be prevented by increasing the concentration of MLSS in the reaction tank to 10,000 mg/L or more. Since the aeration volume that is necessary and sufficient for mixing MLSS is 1/20 or less of the aeration volume for supplying oxygen, the power cost is negligibly low.

### Brief Description of Drawings

[Fig. 1] Fig. 1 is a schematic vertical sectional view of a reactor showing an aerobic biological treatment method of the present invention.
[Fig. 2] Fig. 2 is an explanatory diagram of Example 1.
[Fig. 3] Fig. 3 includes explanatory diagrams of Examples 2 and 3 and Comparative Example 1.

### Description of Embodiments

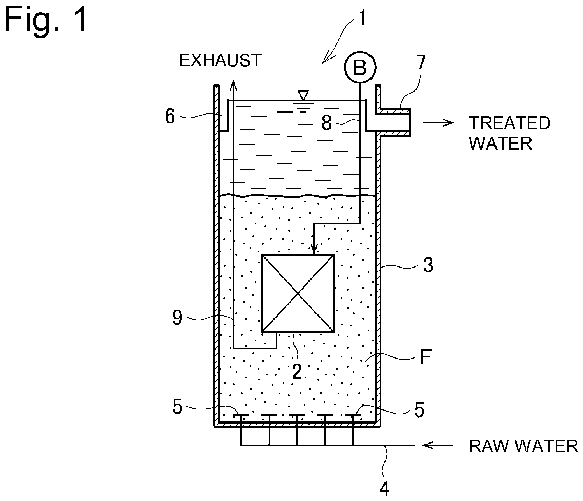

Hereinafter, the present invention will be described further in detail with reference to the drawings. Fig. 1 is a schematic vertical sectional view of a reactor in which an aerobic biological treatment method of the present invention is performed. The reactor 1 is provided with an oxygen dissolution membrane module 2 inside a reaction tank 3. The oxygen dissolution membrane module 2 is provided alone, or a plurality thereof are provided. The oxygen dissolution membrane modules 2 may be provided vertically in multiple stages.

Raw water is supplied to a bottom part of the reaction tank 3 through a pipe 4 and a nozzle 5 to form a fluidized bed F of a carrier such as activated carbon. Treated water that has passed through the fluidized bed F flows over a trough 6 to flow out through an outflow port 7.

The oxygen dissolution membrane module 2 includes a non-porous oxygen dissolution membrane, and oxygen permeated through the membrane is dissolved in water to be treated within the reaction tank 3. Therefore, no air bubbles are generated in the reaction tank 3.

Air from a blower B is supplied to the oxygen dissolution membrane module 2 through a pipe 8, and discharged air flowing out of the oxygen dissolution membrane module 2 is discharged through a pipe 9. Air may flow into the oxygen dissolution membrane module 2 from the top to the bottom, from the bottom to the top, or horizontally. In the case of passing through a plurality of oxygen dissolution membranes, aeration may be performed in series or in parallel.

As the carrier, bioadhesive carriers such as activated carbon, zeolite, sand, sponge, plastic, cellulose, gel (for example, PVA, PEG, polyurethane, polyethylene, and the like), rubber or the like are preferable.

The true specific gravity of such a bioadhesive carrier is preferably about 0.9 to 2.5, particularly preferably 1.0 to 2.0. The size (particle size according to JIS mesh) of the bioadhesive carrier is preferably about 0.1 mm to 20 mm, particularly preferably about 0.2 mm to 5 mm.

The bioadhesive carrier is preferably added in an amount of 1 to 50%, particularly about 5 to 40%, of the volume of the reaction tank.

In Fig. 1, the fluidized bed of the carrier is formed, but the carrier may be suspended. The carrier is preferably suspended or fluidized by one or two or more of liquid aeration, liquid flow, and mechanical operation in the reaction tank.

In this way, the carrier is suspended or fluidized, so that adhesion of organisms to the oxygen dissolution membrane can be prevented, and the oxygen supply rate of the oxygen dissolution membrane can be maintained high.

The adhesion of organisms to the oxygen dissolution membrane can be prevented also by maintaining the concentration of MLSS in the reaction tank high. The concentration of MLSS is maintained at 10,000 mg/L or more, preferably 10,000 to 50,000 mg/L, particularly preferably 20,000 to 30,000 mg/L.

Although the reason why the adhesion to the oxygen dissolution membrane can be prevented by maintaining the concentration of MLSS high is not clear, but the following reasons can be considered. That is, when the concentration of MLSS is high, a large amount of organisms are present in sludge floating in the tank, and nutrition is consumed by the organisms. Therefore, it is considered that nutrition enough to allow the organisms to grow on the membrane surface is not distributed, and thus the adhesion of organisms to the membrane surface is suppressed. Alternatively, it is considered that the same effect as in the presence of a carrier (such as scraping the organisms adhering onto the membrane surface) is obtained by increasing the concentration of MLSS.

The concentration of MLSS is generally about 600 to 6000 mg/L (for example, 800 to 2000 mg/L in the case of sewage, and about 4000 to 6000 mg/L in the case of industrial wastewater), and the oxygen supply rate can be maintained high by adding a carrier in such a range of the concentration.

In order to maintain the concentration of MLSS high, it is preferable to provide a filtration membrane in a solution to be treated in the reaction tank and to extract water that has permeated through the filtration membrane as treated water.

The method of the present invention is suitable for treating water such as wastewater from semiconductor production, wastewater from liquid crystal production, wastewater from chemical processes, wastewater from food production, sewage, or the like.

The oxygen dissolution membrane of the oxygen dissolution membrane module 2 may be any one of hollow fiber membranes, flat membranes, and spiral membranes, but hollow fiber membranes are preferable. As a material for membranes, silicone, polyethylene, polyimide, polyurethane, and the like that are generally used for MABRs can be used, but silicone is suitable. A high-strength composite membrane with a porous hollow fiber coated with a non-porous polymer may be used.

The hollow fiber membrane preferably has an inner diameter of 0.05 to 4 mm, particularly 0.2 to 1 mm, and a thickness of 0.01 to 0.2 mm, particularly 0.02 to 0.1 mm. When the inner diameter is smaller than the above range, the pressure loss in aeration is high. Further, when the inner diameter is larger than the above range, the surface area decreases, and the oxygen dissolution rate decreases. When the thickness is smaller than the above range, the physical strength decreases, and the membrane easily breaks. Conversely, when the thickness is larger than the above range, the oxygen permeation resistance increases, and the oxygen dissolution efficiency decreases.

The length of the hollow fiber membrane is preferably about 0.5 to 3 m, particularly about 1 to 2 m. An excessively large length of the hollow fiber membrane causes problems such as breakage when a large amount of biofilms are adhered to the hollow fiber membrane, or agglomeration into a dumpling shape whereby causing a decrease in oxygen dissolution efficiency and an increase in pressure loss by a reduction in surface area. An excessively small length of the hollow fiber membrane results in high cost. The length of a flat membrane or a spiral membrane is also preferably 0.5 to 1.5 m for the same reasons.

### Examples

### [Example 1] (Prevention of adhesion of biofilm by fluidized bed of carrier)

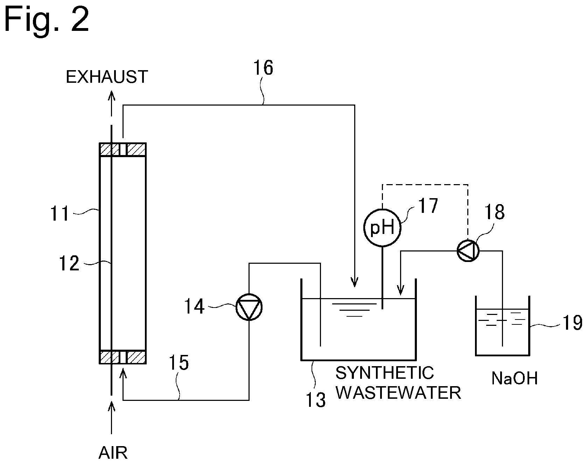

As shown in Fig. 2, 25 mL of crushed coal (not shown) with an average size of 0.7 mm (JIS mesh) was put into a transparent PVC pipe 11 with an inner diameter of 13 mm and a length of 500 mm, then eight silicone tubes 12 with an inner diameter of 0.5 mm and an outer diameter of 0.7 mm were inserted thereto as oxygen dissolution membranes, and the upper and lower sides of the PVC pipe 11 were sealed. Aeration was performed with air through the silicone tubes 12 at 15 mL/min. The inlet pressure was 5 kPa.

Synthetic wastewater (NH₄-N: 400 mg/L, NaHCO₃: 800 mg/L, and K₂HPO₄: 100 mg/L) in a raw water tank 13 was passed through the transparent PVC pipe 11 using a pump 14 and pipes 15 and 16, so that the water was circulated in the raw water tank 13 and the transparent PVC pipe 11 at 40 mL/min. The crushed coal was fluidized by the water circulation. A pH meter 17 was provided in the raw water tank 13, and a NaOH aqueous solution was added thereto from a chemical tank 19 using a chemical injection pump 18 so that the pH does not fall to 7 or less.

Continuous operation was performed for two months under the aforementioned conditions. As a result, the average oxygen concentration of gases at the outlets of the silicone tubes 12 was 10.2%, and the oxygen dissolution efficiency was about 50%. During this period, adhesion of sludge to the silicone tubes 12 was not observed. Further, NH₄-N in the treated water was below the detection limit (50 µg/L).

As a result of calculation from the amount of treated water and the concentration of ammonia removed, the oxygen supply rate of the silicone membranes was 90 to 120 g-O₂/m²/day.

### [Example 2] (Prevention of adhesion of biofilm by increasing concentration of MLSS)

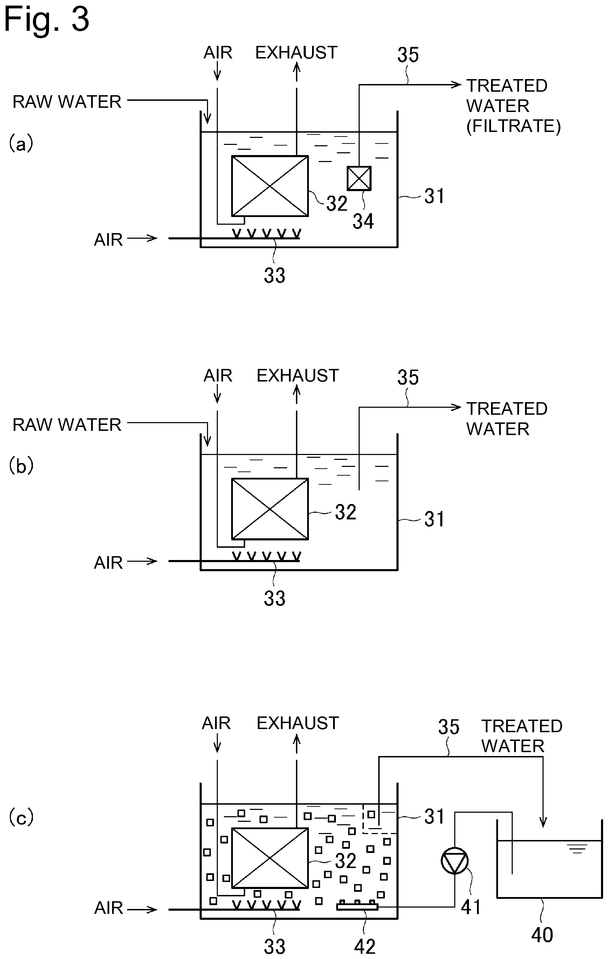

As shown in Fig. 3(a), nitrified sludge was added to a 3-L transparent PVC aeration tank 31 to yield 10,000 mg/L, and an oxygen dissolution membrane module 32 composed of a bundle of 800 silicone tubes with an inner diameter of 0.5 mm, an outer diameter of 0.7 mm, and a length of 30 cm was provided therein.

Aeration was performed with air through the oxygen dissolution membrane module 32 at 150 mL/min. The inlet pressure was 5 kPa. The aeration was performed at a frequency of once every 2 minutes with an amount of air of 6 L/min for 10 seconds through a diffuser tube 33 in a bottom part of the aeration tank.

The same synthetic wastewater as in Example 1 was passed through the aeration tank 31 at 7 mL/min. A solid-liquid separator 34 that is a MF flat membrane was provided in the aeration tank 31, and the filtrate was discharged through a pipe 35 as a treated solution.

Operation was performed for two months under the aforementioned operational conditions. As a result, the MLSS reached 12,000 mg/L after two month. During this period, adhesion of sludge to the oxygen dissolution membrane module 32 was not observed. Further, the concentration of ammonia in treated water was almost 10 mg/L or less, and the oxygen dissolution rate of the silicone membranes calculated from the amount of ammonia removed was 35 to 40 g-O₂/m²/day.

### [Comparative Example 1]

As shown in Fig. 3(b), the same apparatus as in Example 2 was operated except that the solid-liquid separator 34 that is a MF flat membrane was removed from the aforementioned apparatus in Fig. 3(a). The aeration was performed at a frequency of once every two minute for 10 seconds at 1 L/min. Other conditions were the same as in Example 2.

As a result, floating sludge almost disappeared after two months of operation. A biofilm adhered to the oxygen dissolution membrane module 32 and grew to a thickness of about several mm. The concentration of ammonia in treated water was 290 to 340 mg/L. The oxygen dissolution rate of the silicone membranes calculated from the amount of ammonia removed was 7 to 10 g-O₂/m²/day.

### [Example 3] (Prevention of adhesion of biofilm by fluidized carrier)

As shown in Fig. 3(c), the same reactor as in Fig. 3(b) was used, and 1 L of 3-mm square polyurethane sponges were added into the aeration tank. A screen as a carrier separation device that prevents the outflow of sponges (carrier) was provided around a water intake of the pipe 35 inside the aeration tank. A mixed solution of raw water and treated water was passed by a pump 41 at 70 mL/min from a circulating water tank 40 through a raw water supply pipe 42 provided at a lower part of the tank upwardly so that the polyurethane sponges were fluidized. Further, the aeration was performed at a frequency of once every minute for 5 seconds at 1 L/min.

As a result of continuous operation for two months, the concentration of ammonia in treated water through the pipe 35 was almost below the detection limit. During this period, adhesion of sludge to the oxygen dissolution membrane module 32 was not observed. Thereafter, the concentration of NH₄-N in the synthetic wastewater within the circulating water tank 40 was increased to 600 mg/L, and the operation was continued further for two months.

As a result, the concentration of ammonia in the treated solution through the pipe 35 was 0 to 20 mg/L. The oxygen supply rate of the silicone membranes was 45 to 55 g-O₂/m²/day.

From the above results of Examples 1 to 3 and Comparative Example 1, it was confirmed that the oxygen supply rate of the oxygen dissolution membranes was increased to several times or more by the method of the present invention.

Although the present invention has been described in detail using specific aspects, it will be apparent to those skilled in the art that various modifications are possible without departing from the spirit and scope of the invention. The present application is based on Japanese Patent Application No. 2017-051092 filed on March 16, 2017, which is incorporated by reference in its entirety.

### Reference Signs List

- 1:: Reactor
- 2:: Oxygen dissolution membrane module
- 3:: Reaction tank

## Claims

1. An aerobic biological treatment method for treating water to be treated with aerobic organisms by dissolving oxygen in the water to be treated in a reaction tank using an oxygen dissolution membrane disposed in the reaction tank, wherein
a bioadhesive carrier within the reaction tank is suspended or fluidized to prevent adhesion of the organisms to the oxygen dissolution membrane.

2. The aerobic biological treatment method according to claim 1, wherein the bioadhesive carrier has a particle size of 0.1 to 20 mm and is added in an amount of 1 to 50% of the volume of the reaction tank.

3. An aerobic biological treatment method for treating water to be treated with aerobic organisms by dissolving oxygen in the water to be treated in a reaction tank using an oxygen dissolution membrane disposed in the reaction tank, wherein
the concentration of MLSS in the reaction tank is increased to 10,000 mg/L or more to prevent adhesion of the organisms to the oxygen dissolution membrane.

4. The aerobic biological treatment method according to any one of claims 1 to 3, wherein the oxygen dissolution membrane has an average oxygen supply rate of 15 g-O₂/m²/day or more.
